(19) Europäisches Patentamt
European Patent Office
Office européen des brevets

(11) Publication number: 0 171 294 B1

(12) EUROPEAN PATENT SPECIFICATION

(45) Date of publication of patent specification: 09.08.89

(51) Int. Cl.$^4$: B 29 D 11/00

(21) Application number: 85305671.1

(22) Date of filing: 09.08.85

# (54) Process for producing plastic optical fibers.

(30) Priority: 09.08.84 JP 167107/84

(43) Date of publication of application:
12.02.86 Bulletin 86/07

(45) Publication of the grant of the patent:
09.08.89 Bulletin 89/32

(84) Designated Contracting States:
DE FR GB

(58) References cited:
GB-A-1 439 627

PATENTS ABSTRACTS OF JAPAN, vol. 7, no. 290 (P-245)1435r, 24th December 1983; & JP-A-58 163 903 (NIHON ITA GLASS K.K.) 28-09-1983

PATENTS ABSTRACTS OF JAPAN, vol. 7, no. 290 (P-245)1435r, 24th December 1983; & JP-A-58 163 904 (NIHON ITA GLASS K.K.) 28-09-1983

(73) Proprietor: SUMITOMO ELECTRIC INDUSTRIES LIMITED
No. 15, Kitahama 5-chome Higashi-ku
Osaka-shi Osaka 541 (JP)

(72) Inventor: Matsumiya, Norifumi c/o Osaka Works
Sumitomo Electric Ind. Ltd. 1-3, Shimaya 1-chome
Konohana-ku Osaka-shi Osaka (JP)
Inventor: Ueba, Yoshinobuc/o Osaka Works
Sumitomo Electric Ind. Ltd. 1-3, Shimaya 1-chome
Konohana-ku Osaka-shi Osaka (JP)

(74) Representative: Pearce, Anthony Richmond et al
MARKS & CLERK Alpha Tower Suffolk Street
Queensway Birmingham B1 1TT (GB)

(56) References cited:
PATENTS ABSTRACTS OF JAPAN, vol. 4, no. 156 (P-34)638r, 31st October 1980; & JP-A-55 103 504 (NIPPON DENSHIN DENWA KOSHA) 07-08-1980

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

EP 0 171 294 B1

Courier Press, Leamington Spa, England.

## Description

Field of the Invention

The present invention relates to a process for producing plastic optical fibers. More particularly, the invention relates to a process for producing plastic optical fibers having excellent long-term reliability in such characteristics as resistance to heat and environment.

Background of the Invention

Plastic optical fibers have many advantages over conventional optical glass fibers such as the ability to be produced in larger diameters with increased numerical aperture, and greater flexibility and lighter weight.

The primary uses of plastic optical fibers with jackets are as cords or cables, and as composite cords or cables wherein the fibers are assembled with electric wires. The application of plastic optical fibers to optical data links and photosensors is under review. In these current and projected uses of plastic optical fibers, long-term reliability in such characteristics as resistance of heat and environment is of primary importance.

The prior art plastic optical fibers use non-crystalline transparent polymers as core materials and they include polymethyl methacrylates (PMMA, Japanese Patent Publication No. 21660/1978), polystyrenes (PS, Japanese Patent Publication No. 8978/1968) and polycarbonates (PC, Japanese Patent Publication No. 43388/1976). The cladding is made of transparent polymers having lower refractive indices than the core materials.

Both the core and cladding in the prior art plastic optical fibers are made of thermoplastic materials. In particular, since the core materials are noncrystalline, drawing is essential for providing optical fibers with good mechanical properties. However, if the drawn fiber is heated to temperatures close to its glass transition point, the molecular orientation that has been introduced into the core by the drawing operation is relaxed. As as a result, if a plastic optical fiber is heated to temperatures close to or higher than the glass transition point, the fiber either experiences a sudden drop in the mechanical strength or shrinks so greatly that it will no longer be able to maintain its structure as a light guide and will suffer a significant transmission loss.

Various attempts have been made to improve the thermal properties of plastic optical fibers and the present inventors, too, proposed the following approaches: (1) improvements based on the glass transition point of a core material and the melting point of a cladding material (Unexamined Published Japanese Patent Application Nos. 34404/1983 and 65402/1983); (2) an optical fiber having a core/cladding structure that has been irradiated with electron beams (Unexamined Published Japanese Patent Application No. 98706/1983); and (3) an optical fiber made of three layers of core, cladding and sheath, with the sheath formed of a UV-radiation cured resin (Unexamined Published Japanese Patent Application No. 178302/1983).

GB—A—1439627 discloses a method of producing a plastic optical fiber wherein (1) an ethylenically unsaturated monomer A (e.g. one or more of diallyl esters such as diallyl phthalate; allyl esters of unsaturated acids such as allyl methacrylate and allyl acrylate; and divinyl esters such as divinyl phthalate) which can form a cross-linked transparent polymer is pre-polymerised (e.g. by bulk polymerisation) so that 2 to 80% by weight of the pre-polymer is still solvent-soluble; (2) the pre-polymer is shaped (e.g. by moulding or extrusion); (3) at least part of the surface of the resulting shaped article is contacted (e.g. by immersion) with a monomer B (e.g. styrene, methacrylic esters, acrylic esters, vinyl acetate, vinyl chloride, acrylonitrile, butadiene, and mixtures or two or more of these) which forms a transparent polymer having a refractive index different from that of monomer A, so as to cause the monomer B to diffuse into the article through its surface to set up a decreasing concentration gradient of monomer B (or polymeric product thereof); and (4) the monomer B is polymerised and polymerisation of the prepolymer is completed during or after step (3). It will therefore be appreciated that the monomer B is incorporated by diffusion after the article has been shaped.

Summary of the Invention

The principal object of the present invention is to provide a process for producing a plastic optical fiber having further improved long-term reliability in such characteristics as resistance to heat and environment.

According to the present invention, there is provided a process for producing a plastic optical fiber of a monomer or monomers that provide a non-crystalline homopolymer or co-polymer and a polyfunctional reactant, comprising the step of bulk-polymerizing the monomer or monomers, while removing any residual volatile components therefrom, the step of melt-spinning the resulting homopolymer or copolymer, and the step of heating and/or exposing to radiation the resulting melt-spun fiber, wherein a polyfunctional reactant is incorporated during the step of bulk polymerization or melt-spinning.

Brief Description of the Drawings

Fig. 1 is a schematic diagram of an apparatus that may be used to implement the process of the present invention.

Detailed Description of the Invention

The core of the plastic optical fiber produced by the process of the present invention is made of a non-crystalline homopolymer or copolymer which is prepared from one or more monomers such as alkyl methacrylates, aryl methacrylates, styrene derivatives, alkyl acrylates, aryl acrylates, and deuterium-substituted products or fluorine compounds thereof. Polymers mainly composed of an alkyl methacrylate and copolymers mainly composed of an alkyl methacrylate and a styrene derivative are preferably used for the core material, with the alkyl methacrylate being preferably methyl methacrylate. Further, an alkyl acrylate (e.g. methyl acrylate, ethyl acrylate, propyl acrylate, butyl acrylate, pentyl acrylate, hexyl acrylate, etc) is preferably used as a comonomer in a small amount, preferably 1 to 5 vol% based on the total volume of the monomers. When electron beam irradiation is performed in the later step, an alkyl acrylate having the alkyl moiety of 4 or more carbon atoms is preferably used as the comonomer.

The polyfunctional reactant which can be used in the present invention includes those having functional groups such as —C=C, —C≡C,

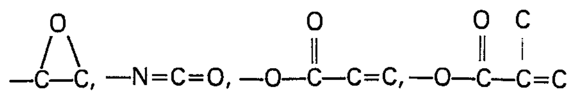

and the like. The polyfunctional reactant preferably has a molecular weight of 100 to 1,000. Preferred examples include allyl compounds such as diethylene glycol diallyl carbonate and triallyl isocyanurate, acrylate and methacrylate compounds such as trimethylolpropane triacrylate, diethylene glycol dimethacrylate, diethylene glycol diacrylate, neopentyl glycol diacrylate, pentaerythritol pentacrylate and glycidyl acrylate, and deuterium-substituted products or fluorides thereof.

The polyfunctional reactant is generally added in an amount of 0.5 to 50 parts by weight, preferably 1 to 20 parts by weight, per 100 parts by weight of the core material. When the amount is less than 0.5 parts by weight, heat resistance of the resulting plastic optical fiber is slightly improved, and when it is more than 50 parts by weight, flexibility of the fiber is deteriorated.

The cladding is made of any of the polymers that are substantially transparent and have lower refractive indices than the core materials (i.e., core-forming polymers). Illustrative cladding polymers include a copolymer of vinylidene fluoride and tetrafluoroethylene, a terpolymer of vinylidene fluoride, tetrafluoroethylene and hexafluoropropylene, a fluorine-containing methacrylate polymer, a copolymer of fluorine-containing methacrylate and methyl methacrylate silicone resin and ethylene-vinyl acetate copolymer.

The process of the present invention is explained in more detail with reference to Fig. 1.

The monomers in tanks 1, 1′ are driven by respective transfer pumps 2, 2′ into a bulk polymerization reactor 3. The monomers that have been polymerized in reactor 3 to a predetermined degree of polymerization (preferably several thousands to several hundreds thousand) are driven by a transfer pump 4 into the second reactor 5, wherein substantially complete polymerization of the monomers occurs. A polyfunctional reactant in a tank 6 is driven by a transfer pump 7 into the polymer or copolymer formed in the second reactor 5. The unreacted monomers and any other residual volatile components are removed from the polymer or copolymer by passage through a vacuum line 8. The clean polymer or copolymer is heated to melt and the molten stream is fed into a spinning head 9 where it is covered with a molten cladding that is obtained by the passage through an extruder 11 of a cladding material supplied from a tank 10. The core and cladding materials combined in a concentric fashion are spun into a fiber 12 as they pass through the head 9. The fiber 12 is heated in a heater 13 so as to polymerize the polyfunctional reactant in the fiber. It is then taken up by rollers 14 and accumulated on a winding machine 15.

The process of the present invention is by no means limited to the particular embodiment described above. Instead of being incorporated in the polymer in the second reactor 5, the polyfunctional reactant may be incorporated in the polymer after it has been freed of any volatile components and while it is being subjected to the melt-spinning step. With reference to Fig. 1, the polyfunctional reactant in a tank 16 may be driven by a transfer pump 17 into the polymer just before transfer to the spinning head 9. The heater 13 may be replaced by an infrared radiation generator; alternatively, a generator of X-rays, β-rays or ultraviolet radiation may be used instead of the heater 13. Further, both heating and exposing to radiation may also be performed.

In the step of heating and/or exposing to radiation the drawn fiber to polymerize the polyfunctional reactant in the fiber as described above, the heating temperature varies depending on kind and molecular weight of the core material, and it is preferably high as long as the draw fiber does not change in diameter or deform since the heating time can be shortened. For the purpose, the heating temperature is preferably within the range of from glass transition point (Tg) of the core material to Tg + 30°C, and the heating time is within several seconds to several minutes. In order to complete the reaction of the polyfunctional reactant with the fiber, the heat treatment may be continued for additional several tens minutes. When the drawn fiber is exposed to electron beam, the exposure amount is preferably not more than 15 Mrad and more preferably 10 Mrad or less. If it is too large, the mechanical strength and the transmission loss characteristic of the fiber are deteriorated.

The plastic optical fiber produced by the process of the present invention has the crosslinked or intertwined structure that has been introduced into the core forming polymer or copolymer as a result of its

reaction with the polyfunctional reactant following the spinning and drawing operations. Because of this crosslinked or intertwined structure, the molecular orientation in the core polymer will not be lost at all or is only lost with difficulty even if the core is heated to temperatures higher than its glass transition point. As a result, a plastic optical fiber having good thermal properties as characterized by little or no heat shrink can be obtained. The structural integrity of the fiber as a light guide is maintained and its transmission loss characteristics have a very small temperature dependency. In addition, the cross-linked or intertwined structure in the core polymer provides high mechanical properties for the fiber, especially high tensile strength.

The following Examples are provided for further illustration of the claimed process and are by no means to be construed as limiting the invention.

Example 1

A substantially oxygen-free pure monomer composition was prepared in a monomer tank, which was composed of two monomers, methyl methacrylate (98 vol%) and n-butyl acrylate (2 vol%), and 0.01 mol% of tertiary butyl peroxide (polymerization initiator) and 0.3 mol% of n-butyl mercaptan (chain transfer agent). This monomer composition was transferred to a bulk polymerization reactor where polymerization was conducted for about 3 hours at a temperature of 120—130°C and a pressure of 2—3 kg/cm$^2$. The reaction product was transferred to the second reactor held at 180°C. As the polymerization of the monomers proceeded in the second reactor, any volatile components were removed by passage through a vacuum line held at 5—10 mmHg. The clean polymer was fed into a spinning head as a purified trimethylolpropane triacrylate (polyfunctional reactant) in a separate tank was added in an amount of 3 parts by weight per 100 parts by weight of the polymer. At the same time, a cladding material made of a vinylidene fluoride/tetrafluoroethylene copolymer was fed into the spinning head (220°C) where it was combined with the molten core material and coextruded as a fiber having a core-cladding structure. Immediately after the coextrusion, the fiber was passed through a heating unit having an internal temperature of 150°C so as to draw down the fiber at a draw ratio of 2 to 3 and polymerize the polyfunctional reactant. The fiber obtained by winding at 12 m/min had the characteristics summarized in Table below.

Example 2

A plastic optical fiber was prepared as in Example 1 except that the polyfunctional reactant was polymerized by irradiating the drawn fiber with electron beams. The characteristics of the fiber are shown in the following Table.

Comparative Example 1

A plastic optical fiber was prepared as in Example 1 except that no polyfunctional reactant was used. The characteristics of the fiber are shown in the following Table.

Comparative Example 2

A plastic optical fiber was prepared as in Example 2 except that no polyfunctional reactant was used. The characteristics of the fiber are shown in the following Table.

Comparative Example 3

A plastic optical fiber was prepared as in Example 1 except that commercial PMMA resin pellets, rather than the reaction product of the bulk polymerisation of monomers, were supplied into the second reactor. The characteristics of the fiber are shown in the following Table.

Comparative Example 4

A plastic optical fiber was prepared as in Example 2 except that commercial PMMA resin pellets, rather than the reaction product of the bulk polymerisation of monomers, were supplied into the second reactor. The characteristics of the fiber are shown in the following Table.

Example 3

A plastic optical fiber was prepared as in Example 1 except that diethylene glycol diallyl carbonate was used as the polyfunctional reactant. The characteristics of the fiber are shown in the following Table.

Example 4

A plastic optical fiber was prepared as in Example 2 except that diethylene glycol diallyl carbonate was used as the polyfunctional reactant. The characteristics of the fiber are shown in the following Table.

Examples 5 and 6

A plastic optical fiber was prepared as in Example 4 except that the amount of diethylene glycol diallyl carbonate (polyfunctional reactant) was increased to 5 parts by weight (Ex. 5) or 10 parts by weight (Ex. 6) and that the temperature of the coextrusion spinning head was reduced to 210°C (Ex. 5) or 190°C (Ex. 6). The characteristics of the fibers are shown in the following Table.

Table

| | Examples 1 | 2 | 3 | 4 | 5 | 6 |
|---|---|---|---|---|---|---|
| Core material | methyl methacrylate polymer (polymerized and spun within closed space) | Same as the left | Same as the left | Same as the left | Same as the left | Same as the left |
| Cladding material | vinylidene fluoride/ tetrafluoroethylene copolymer | Same as the left | Same as the left | Same as the left | Same as the left | Same as the left |
| Polyfunctional reactant | | | | | | |
| type | trimethylolpropane triacrylate | trimethylol-propane tri-acrylate | diethylene glycol diallyl carbonate | Same as the left | Same as the left | Same as the left |
| amount (parts by weight per 100 parts by weight of core material) | 3 | 3 | 3 | 3 | 5 | 10 |
| method of poly-merization | heat | electron beam | heat | electron beam | electron beam | electron beam |
| Fiber dimensions | | | | | | |
| core inside diameter (mm) | 0.46 | 0.48 | 0.47 | 0.48 | 0.46 | 0.45 |
| cladding outside diameter (mm) | 0.50 | 0.50 | 0.51 | 0.50 | 0.49 | 0.49 |
| Transmission loss at 660 nm (dB/m) | 0.4 | 0.6 | 0.3 | 0.6 | 0.4 | 0.7 |
| Resistance to heat shrinkage (percent retention, %) for 120°C x 10 min | 92 | 96 | 90 | 97 | 95 | 98 |

Table

| | Comparative Examples 1 | 2 | 3 | 4 |
|---|---|---|---|---|
| Core material | methyl methacrylate polymer (polymerized and spun within closed space) | methyl methacrylate polymer (polymerized and spun within closed space) | commercial PMMA pellets | commercial PMMA pellets |
| Cladding material | vinylidene fluoride/ tetrafluoroethylene copolymer | vinylidene fluoride/ tetrafluoroethylene copolymer | vinylidene fluoride/ tetrafluoroethylene copolymer | vinylidene fluoride/ tetrafluoroethylene copolymer |
| Polyfunctional reactant | | | | |
| type | none | none | trimethylol-propane tri-acrylate | trimethylolpropane triacrylate |
| amount (parts by weight per 100 parts by weight of core material) | 0 | 0 | 3 | 3 |
| method of poly-merization | heat | electron beams | heat | electron beams |
| Fiber dimensions | | | | |
| core inside diameter (mm) | 0.46 | 0.47 | 0.47 | 0.47 |
| cladding outside diameter (mm) | 0.50 | 0.50 | 0.50 | 0.50 |
| Transmission loss at 660 nm (dB/m) | 0.3 | 0.5 | 1.1 | 2.0 |
| Resistance to heat shrinkage (percent retention, %) for 120 °C x 10 min | 45 | 65 | 89 | 94 |

## Claims

1. A process for producing a plastic optical fiber of a monomer or monomers that provide a non-crystalline homopolymer or co-polymer and a polyfunctional reactant, comprising the step of bulk-polymerizing the monomer or monomers, while removing any residual volatile components therefrom, the step of melt-spinning the resulting homopolymer or copolymer, and the step of heating and/or exposing to radiation the resulting melt-spun fiber, wherein a polyfunctional reactant is incorporated during the step of bulk polymerization or melt-spinning.

2. A process for producing a plastic optical fiber of claim 1, wherein said radiation is electron beam.

3. A process for producing a plastic optical fiber of claim 1, wherein said heating is performed by infrared irradiation.

4. A process for producing a plastic optical fiber of claim 1, wherein said non-crystalline homopolymer or copolymer is a polymer mainly composed of an alkyl methacrylate or a copolymer mainly composed of an alkyl methacrylate and styrene derivative.

5. A process for producing a plastic optical fiber of claim 4, wherein said alkyl methacrylate is methyl methacrylate.

6. A process for producing a plastic optical fiber of claim 4, wherein said polymer mainly composed of an alkyl methacrylate or said copolymer mainly composed of an alkyl methacrylate and a styrene derivative contains 1 to 5 vol% of alkyl acrylate.

7. A process for producing a plastic optical fiber of claim 6, wherein said alkyl acrylate has the alkyl moiety of 4 or more carbon atoms.

8. A process for producing a plastic optical fiber of claim 1, wherein said polyfunctional reactant is incorporated in an amount of 1 to 20 parts by weight per 100 parts by weight of the homopolymer or copolymer.

9. A process for producing a plastic optical fiber of claim 8, wherein said polyfunctional reactant is selected from the group consisting of polyfunctional allyl compounds, polyfunctional acrylate compounds and polyfunctional methacrylate compounds.

## Patentansprüche

1. Verfahren zum Herstellen einer optischen Faser aus plastischem Material aus einem Monomer oder Monomeren, die ein nicht-kristallines Homopolymer oder Copolymer und ein polyfunktionales Reagenzmittel ergeben, umfassend den Schritt der Blockpolymerisierung des Monomeren oder der Monomere, während alle flüchtigen Restbestandteile daraus entfernt werden, den Schritt des Schmelzspinnens des resultierenden Homopolymers oder Copolymers und den Schritt des Erwärmens und/oder der Bestrahlung der resultierenden schmelzgesponnenen Faser, wobei ein polyfunktionales Reaktionsmittel während dem Schritt der Blockpolymerisation oder dem Schmelzspinnen inkorporiert wird.

2. Verfahren zum Herstellen einer optischen Faser aus Plastikmaterial nach Anspruch 1, bei dem die Bestrahlung mittels eines Elektronenstrahls erfolgt.

3. Verfahren zum Herstellen einer optischen Faser aus Plastikmaterial nach Anspruch 1, bei dem die Erwärmung durch Infrarotbestrahlung ausgeführt wird.

4. Verfahren zum Herstellen einer optischen Faser aus Plastikmaterial nach Anspruch 1, bei dem das nicht-kristalline Homopolymer oder Copolymer ein Polymer ist, das hauptsächlich aus einem Alkylmethacrylate besteht, oder ein Copolymer ist, das hauptsächlich aus einem Alkylmethacrylat und einem Styrolderivat besteht.

5. Verfahren zum Herstellen einer optischen Faser aus Plastikmaterial nach Anspruch 4, bei dem das Alkylmethacrylat Methylmethacrylat ist.

6. Verfahren zum Herstellen einer optischen Faser aus Plastikmaterial nach Anspruch 4, bei dem das Polymer, das hauptsächlich aus einem Alkylmethacrylat besteht, oder das Copolymer, das hauptsächlich aus einem Alkylmethacrylat und einem Styrolderivat besteht, 1 bis 5 Vol.-% Alkylacrylat enthält.

7. Verfahren zum Herstellen einer optischen Faser aus Plastikmaterial nach Anspruch 6, bei dem das Alkylacrylat den Alkylanteil von 4 oder mehr Kohlenstoffatomen hat.

8. Verfahren zum Herstellen einer optischen Faser aus Plastikmaterial nach Anspruch 1, bei dem das polyfunktionale Reaktionsmittel in einem Anteil von 1 bis 20 Gew.-Teilen auf 100 Gew.-Teile des Homopolymers oder Copolymers inkorporiert wird.

9. Verfahren zum Herstellen einer optischen Faser aus Plastikmaterial nach Anspruch 8, bei dem das polyfunktionale Reaktionsmittel aus der Gruppe ausgewählt ist, die aus polyfunktionalen Allylverbindungen, polyfunktionalen Acrylatverbindungen und polyfunktionalen Methacrylkatverbindungen besteht.

**Revendications**

1. Un procédé de production d'une fibre optique plastique d'un monomère ou des monomères qui donnent un homopolymère ou un copolymère non cristallin et d'un réactif polyfonctionnel, comprenant l'étape de polymérisation en masse du monomère ou des monomères, tout en éliminant tout composant volatil résiduel, l'étape de filage à l'état fondu de l'homopolymère ou du copolymère résultant, et l'étape de chauffage et/ou d'exposition à un rayonnement de la fibre filée à l'état fondu résultante, procédé selon lequel un réactif polyfonctionnel est incorporé durant l'étape de polymérisation en masse ou dans l'étape de filage à l'état fondu.

2. Un procédé de production d'une fibre optique plastique selon la revendication 1, selon lequel ledit rayonnement est un faisceau d'électrons.

3. Un procédé de production d'une fibre optique plastique selon la revendication 1, selon lequel ledit chauffage est conduit par irradiation à l'infrarouge.

4. Un procédé de production d'une fibre optique plastique selon la revendication 1, selon lequel ledit homopolymère ou copolymère non cristallin est un polymère composé principalement d'un méthacrylate d'alkyle ou d'un copolymère composé principalement d'un méthacrylate d'alkyle et d'un dérivé de styrène.

5. Un procédé de production d'une fibre optique plastique selon la revendication 4, selon lequel ledit méthacrylate d'alkyle est du méthacrylate de méthyle.

6. Un procédé de production d'une fibre optique plastique selon la revendication 4, selon lequel ledit polymère est composé principalement d'un méthacrylate d'alkyle ou ledit copolymère est composé principalement d'un méthacrylat d'alkyle et d'un dérivé de styrène et contient 1 à 5% en volume d'acrylate d'alkyle.

7. Un procédé de production d'une fibre optique plastique selon la revendication 6, selon lequel ledit acrylate d'alkyle à une moitié alkyle de 4 ou plus de 4 atomes de carbone.

8. Un procédé de production d'une fibre optique plastique selon la revendication 1, selon lequel ledit réactif polyfonctionnel est incorporé en quantité de 1 à 20 parties en poids pour 100 parties en poids de l'homopolymère ou du copolymère.

9. Un procédé de production d'une fibre optique plastique selon la revendication 8, selon lequel ledit réactif polyfonctionnel est choisi dans le groupe comprenant les composés d'allyle polyfonctionnels, les composés acrylates polyfonctionnels et les composés méthacrylates polyfonctionnels.

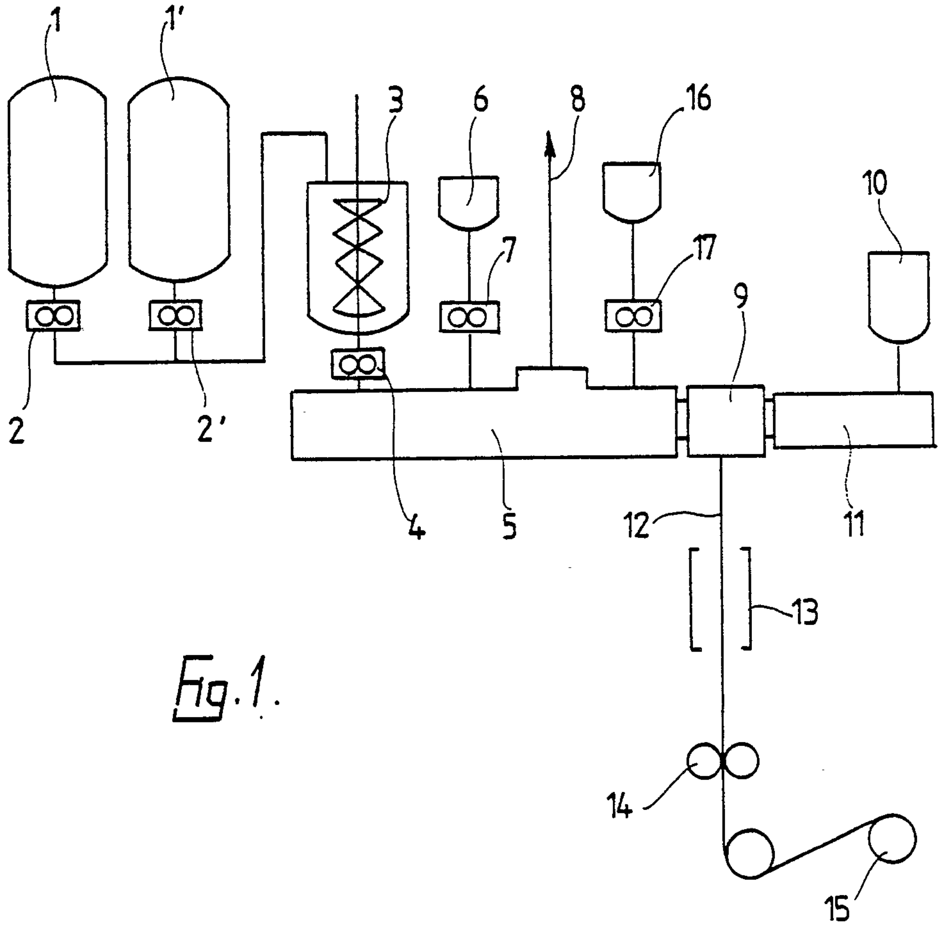


Fig.1.